(19) **Europäisches Patentamt / European Patent Office / Office européen des brevets**

(11) **EP 4 252 217 B1**

(12) **EUROPEAN PATENT SPECIFICATION**

(45) Date of publication and mention
of the grant of the patent:
**14.01.2026 Bulletin 2026/03**

(21) Application number: **22724931.5**

(22) Date of filing: **14.04.2022**

(51) International Patent Classification (IPC):
**G08G 1/01** (2006.01)

(52) Cooperative Patent Classification (CPC):
**G08G 1/0133; G08G 1/0141**

(86) International application number:
**PCT/JP2022/018345**

(87) International publication number:
**WO 2023/276420 (05.01.2023 Gazette 2023/01)**

(54) **DISTRIBUTED MULTI-TASK MACHINE LEARNING FOR TRAFFIC PREDICTION**

VERTEILTES MASCHINENLERNEN MIT MEHREREN AUFGABEN ZUR VERKEHRSVORHERSAGE

APPRENTISSAGE MACHINE MULTITÂCHE DISTRIBUÉ POUR LA PRÉDICTION DE TRAFIC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2021 US 202117359764**

(43) Date of publication of application:
**04.10.2023 Bulletin 2023/40**

(73) Proprietor: **Mitsubishi Electric Corporation**
**Tokyo 1008310 (JP)**

(72) Inventors:
• **GUO, Jianlin**
**Cambridge, Massachusetts 02139-1955 (US)**
• **ZENG, Tengchan**
**Cambridge, Massachusetts 02139-1955 (US)**
• **KIM, Kyeong Jin**
**Cambridge, Massachusetts 02139-1955 (US)**
• **PARSONS, Kieran**
**Cambridge, Massachusetts 02139-1955 (US)**
• **ORLIK, Philip**
**Cambridge, Massachusetts 02139-1955 (US)**
• **DI CAIRANO, Stefano**
**Cambridge, Massachusetts 02139-1955 (US)**

(74) Representative: **Pfenning, Meinig & Partner mbB**
**Patent- und Rechtsanwälte**
**Theresienhöhe 11a**
**80339 München (DE)**

(56) References cited:
**US-A1- 2012 072 096     US-A1- 2019 311 298**

• **WILBUR MICHAEL ET AL: "Time-dependent Decentralized Routing using Federated Learning", 2020 IEEE 23RD INTERNATIONAL SYMPOSIUM ON REAL-TIME DISTRIBUTED COMPUTING (ISORC), IEEE, 19 May 2020 (2020-05-19), pages 56 - 64, XP033778097, DOI: 10.1109/ISORC49007.2020.00018**
• **YI LIU ET AL: "Privacy-preserving Traffic Flow Prediction: A Federated Learning Approach", ARXIV.ORG, CORNELL UNIVERSITY LIBRARY, 201 OLIN LIBRARY CORNELL UNIVERSITY ITHACA, NY 14853, 19 March 2020 (2020-03-19), XP081624790**

**Description**

[Technical Field]

The invention relates generally to machine learning for vehicular traffic systems, and more particularly to a computer-implemented distributed machine learning based traffic prediction method for predicting traffic of roads and a distributed machine learning based traffic predication system for providing traffic prediction to vehicles traveling on a road network.

[Background Art]

Document WILBUR MICHAEL ET AL, "Time-dependent Decentralized Routing using Federated Learning", 2020 IEEE 23RD INTERNATIONAL SYMPOSIUM ON REAL-TIME DISTRIBUTED COMPUTING (ISORC), IEEE,19 May 2020 (2020-05-19), page 56-64, XP033778097, DOI: 10.1109/ISORC49007.2020.00018 describes a decentralized route planning approach for private fog methods.
Document US 2019/311298 A1 describes a navigation device for training a machine learned model.
Document YI LIU ET AL, "Privacy-preserving Traffic Flow Prediction: A Federated Learning Approach", ARXIV.ORG, CORNELL UNIVERSITY LIBRARY, 201 OLIN LIBRARY CORNELL UNIVERSITY ITHACA, NY 14853, 19 March 2020 (2020-03-19), XP081624790 describes a privacy-preserving machine learning technique.
Document US 2012/072096 A1 describes techniques for generating predictions of traffic conditions at one or more indicated times, such as by using probabilistic techniques to assess various input data while producing predictions for each of one or more road segments (e.g., in a real-time manner based on changing current conditions for a network of roads in a given geographic area).
Intelligent transportation system becomes more and more important for smart cities as the number of connected vehicles and autonomous vehicles increases rapidly. Different from conventional vehicles, the connected vehicles and the autonomous vehicles are much intelligent. They are not only capable of collecting various vehicle data and traffic data but also capable of running advanced algorithms to guide their mobility. In addition, there are much more traffic data collected by transportation infrastructure data collectors and mobile devices. For example, California Caltrans Performance Measurement System (PeMS) has installed hundreds of thousands of data collectors across the state to collect various traffic data. Each data collector collects traffic data every five minutes. Furthermore, mobile devices such as smart phones can also collect traffic data and provide crowdsource information. As a result, there are huge amount of traffic data available. It is critical to utilize the vehicle intelligence and the rich traffic data to improve driving safety, travel time, energy efficiency, air pollution reduction, etc.
However, realizing intelligent traffic is an extremely difficult problem. Physical roads form a complex road network. The most importantly, traffic conditions such as congestion at one location can propagate to and impact on traffic conditions at other locations. Furthermore, the unexpected events such as traffic accident and driver behave can make the traffic condition even more dynamic and uncertain. Therefore, how to accurately predict traffic and apply the prediction to plan route is challenging but yet demanding because the route planning is probably the most popular application for vehicles. But combining existing technologies is not able to solve the problem.
There are existing route planning methods. However, the existing route planning methods relying on crowdsourcing information can make misleading decision. For example, if one vehicle carries 100 mobile devices, the crowdsourcing based route planning methods may think there are 100 vehicles, which will result in much higher traffic density. As a result, the corresponding road may be considered as congested. In addition, existing route planning methods make route planning based on current traffic information without prediction. However, vehicular traffic system is a very dynamic system. Traffic condition varies from time to time. Therefore, to make optimal route planning, intelligent traffic prediction methods are required. The intelligent traffic prediction methods heavily rely on machine learning techniques.
Machine learning techniques have been applied in vehicle mobility management. For example, in autonomous driving vehicles, different types of sensors are employed to collect data and various machine learning algorithms are used to learn and analyze data for controlling and guiding vehicle motion. For connected vehicles, machine leaning techniques can be used at the infrastructure such as cloud to realize centralized learning and therefore, remotely control vehicle mobility.
To plan a route, prediction techniques must be able to make short time prediction, middle time prediction and long time prediction. However, on board learning in autonomous vehicle and the centralized learning at cloud are not practical for route planning. Firstly, machine learning algorithms need to be trained using large amount of different data types. A vehicle can only collect the limited data because a vehicle can only see scene within its view range and cannot see things blocked by objects such as buildings and other vehicles even if objects are close to it. The limited data is able to train and predict instant local traffic for instant motion planning. However, the instant prediction is not suitable to make longer time route planning. Secondly, even cloud has potential to collect sufficient amount of data to train machine learning algorithms, there are multiple challenges present: 1) the cloud or centralized learning relies on communication, but communication bandwidth is limited and therefore, it is impractical for data collectors such as vehicles to send all data to cloud; 2) data privacy policy may prevent data collectors to transfer data to cloud because machine learning algorithms are able to learn data collector's privacy and driver's personal information; and 3) security policy may also prevent data collectors to send their data to cloud or centralized server, e.g., security attackers may intercept data and locate driver's location for dangerous action.

Efficient traffic requires efficient road utilization. To do that, route planning algorithms must make optimal route planning to minimize traffic congestion and reduce travel time. To that end, traffic prediction technique becomes critical for efficient traffic. As described above, the conventional centralized learning and emerging on board learning cannot make feasible traffic prediction. The existing route planning methods cannot plan optimal route due to the lack of the traffic prediction. Therefore, it is desirable to provide an accurate and practical vehicular traffic prediction mechanism to perform optimal route planning for intelligent traffic.

Accordingly, there is a need to provide a method for accurate vehicular traffic prediction and a route planning method to plan optimal route by using the predicted traffic.

[Summary of Invention]

It is one object of some embodiments to provide a distributed machine learning based vehicular traffic prediction method that can accurately predict short time, middle time and long time traffic for both city roads and highways. Additionally, it is another object of some embodiments to make optimal route planning for vehicles to minimize traffic congestion and travel time by using the accurate traffic prediction.

The above problems are solved by the subject-matter according to the independent claims. Some embodiments are based on the recognition that vehicular traffic data have been widely collected by transportation infrastructure data collector and vehicles. How to utilize data available to optimize vehicular traffic becomes an issue to be addressed. Due to facts such as communication bandwidth limitation, privacy protection and security, it is impractical to transfer all data to central server for centralized data analysis and traffic prediction. On the other hand, the limited amount of data at an individual data collector is not feasible to train machine learning algorithm and make large scale traffic prediction for a city or a state because a data collector does not know the traffic conditions at other locations. For example, a vehicle cannot predict the traffic where vehicle has not yet traveled. Therefore, conventional machine learning approaches are not suitable to make traffic prediction for optimal route planning.

To that end, some embodiments of the invention utilize the distributed machine learning techniques such as federated learning to build robust traffic models for accurate traffic prediction, wherein the infrastructure devices such as IEEE DSRC/WAVE roadside unit (RSU) and/or 3GPP C-V2X eNodeB and/or remote server act as learning server and data collectors serve as learning agents. A learning server coordinates distributed learning among a set of data collectors. A learning server first designs and distributes the traffic models such as neural networks to the set of data collectors for the first round of the distributed training. Each data collector then trains the received traffic models independently by using its own data without sharing its data with other data collectors and learning server. After certain iterations of training process, each data collector sends the trained traffic models to the learning server, which then aggregates the received traffic models from all data collectors to generate the common global traffic models. Upon completion of the model aggregation, the learning server re-distributes the aggregated traffic models to data collectors for the second round of training process. This process of training and aggregation continues until the robust traffic models are built.

It must be recognized that even data collectors are distributed at different geometric locations, the traffic data collected among data collectors may be correlated because in vehicular environment, traffic condition at one location can propagate to other locations and impact on traffic conditions at other locations. Therefore, data collected at one location can also impact on data collected at other locations. In addition, traffic patterns at different locations can be different. For example, traffic pattern at an intersection is different from traffic pattern on the freeway.

To that end, it is desirable to have different but yet correlated traffic models to be trained by distributed data collectors. To that end, some embodiments are based on realization that multi-task distributed learning techniques are suitable to predict large scale traffic for route planning. Accordingly, learning server designs different but yet correlated traffic models to be distributed to data collectors such that traffic models for closer data collectors have closer relationship. Take neural network based traffic model for example, the closer data collectors can share some weight parameters. However, the neural network models for data collectors far away from each other do not share parameter.

Some embodiments are based on the recognition that data collectors reflect location information because data collector are distributed at different locations. Besides location factor, there are other factors, e.g., time, weather, road condition and special event, that can also impact traffic environment. At same location, traffic condition varies based on different time, different weather, etc. Rush hour traffic condition is much different from off hour traffic condition. Snow day traffic condition is much different from sunny day traffic condition.

To that end, it is desirable that data collectors divide their data into different clusters based on time, weather, etc.

Accordingly, learning server defines a set of rules and distributes the rules to data collectors to cluster their data. As a result, data collectors train different traffic models by using different data clusters. Data collectors do not train traffic models for which data collectors do not have appropriate data. Therefore, data collectors only send trained traffic models to learning server.

Accordingly, the learning server build common global traffic models by aggregating the locally trained traffic models by considering information including location, time, weather, etc.

The invention is set out in the appended set of claims.

Some embodiments are based on the recognition that each application in vehicular environment has different requirements. Therefore, different technologies must be developed for different applications. Route planning requires large scale traffic prediction with different time horizons including short time prediction, middle time prediction and long time prediction.

Accordingly, some embodiments of the current invention provide multi-horizon traffic prediction such that for each short time prediction or middle time prediction or long time prediction, traffic is predicted with multi-horizon in time domain. A prediction time horizon consists of multiple prediction time periods. For example, a short time horizon may consist of 5 prediction periods, a middle time horizon may include 20 prediction periods and a long time horizon may consist of 50 prediction periods, where a prediction period represents a $\Delta t$ time interval, e.g., for $\Delta t = 5$ minute, the traffic is predicted every 5 minute. As a result, in a short time horizon, traffic is predicted 5 times, in a middle time horizon, traffic is predicted 20 times and in a long time horizon, traffic is predicted 50 times. Even the longer time horizon provides more traffic predictions, the shorter time horizon gives more accurate traffic predictions.

Some embodiments are based on the recognition that route planning is to find optimal route in real road network for a trip based on criteria such as travel time and energy consumption.

Accordingly, some embodiments of the current invention formulate the route planning problem as an optimization problem to minimize travel time even other metrics such as energy consumption and driving comfort can be optimized. The real road map is converted into the time-dependent graph, in which vertices are intersections or connecting points of any two adjoining road sub-segments and the edges are the road sub-segments connecting two adjacent vertices points. There is at least data collector on each edge. Different from conventional traffic graph built based on road structure and distance, an edge may consist of multiple road-segments and most importantly, the length of the edge is the travel time on the edge. As a result, when traffic condition changes, the length of the edge also changes and therefore, shape of the graph varies as well.

Some embodiments are based on the recognition that there are uncertainties in vehicular environment. Therefore, traffic models must be trained to handle unexpected events such as traffic accident. It is impractical for data collectors capture all types of unexpected events. However, vehicles can capture these events when they travel on roads.

Accordingly, route planning model and traffic prediction model can interact with each other to make real time traffic model enhancement.

The presently disclosed embodiments will be further explained with reference to the attached drawings. The drawings shown are not necessarily to scale, with emphasis instead generally being placed upon illustrating the principles of the presently disclosed embodiments.

[Brief Description of Drawings]

[Fig. 1]

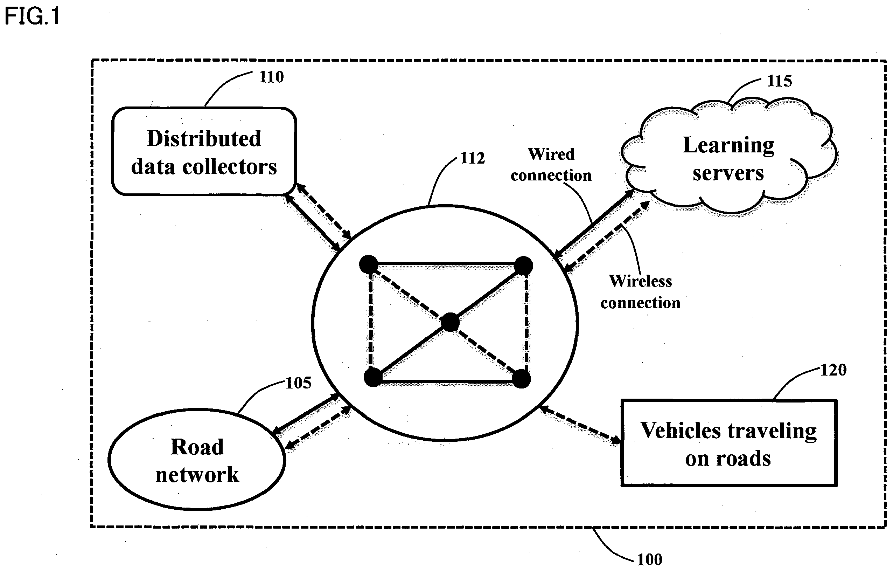

Figure 1 shows the intelligent vehicular transportation system, according to some embodiments of the present invention.
[Fig. 2]

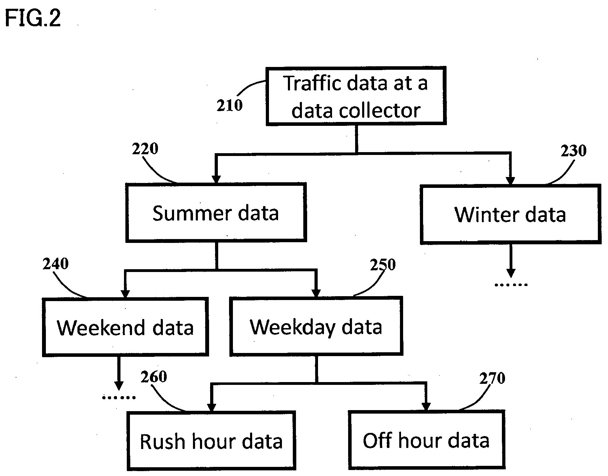

Figure 2 shows an example of data clustering method that is used to divide data at each data collector into clusters, according to some embodiments of the present invention.
[Fig. 3A]

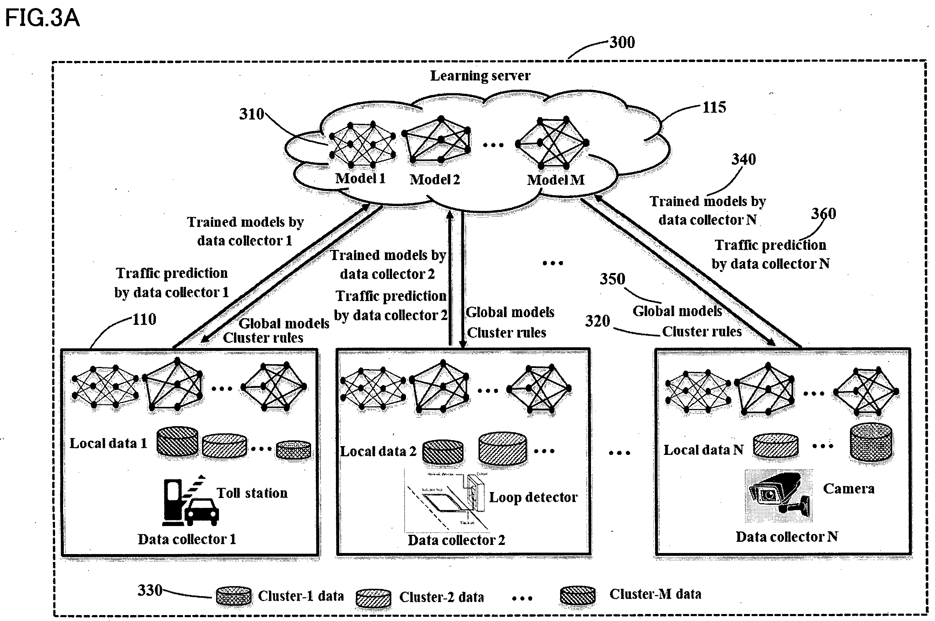

Figure 3A illustrates the traffic prediction architecture using distributed multi-task learning techniques, according to some embodiments of the present invention.
[Fig. 3B]

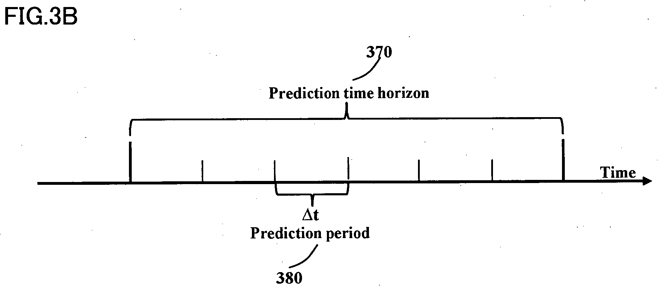

Figure 3B demonstrates a prediction time horizon with six prediction periods, according to some embodiments of the present invention.
[Fig. 3C]

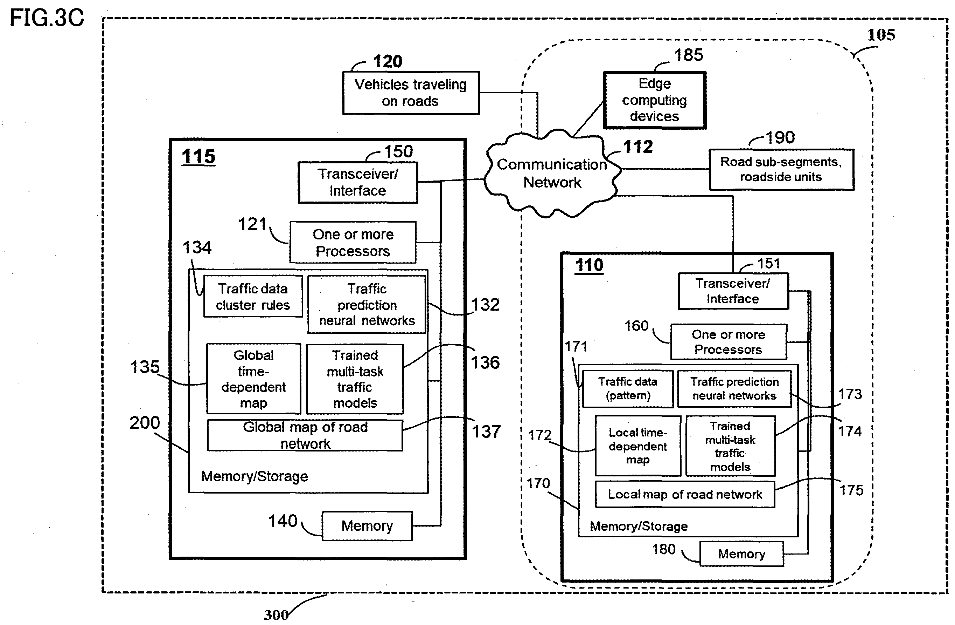

Figure 3C shows a schematic illustrating an example of a traffic prediction architecture that includes the learning server connected to the distributed data collectors (learning agents) via the communication network(s), according to embodiments of the present invention.

[Fig. 4]

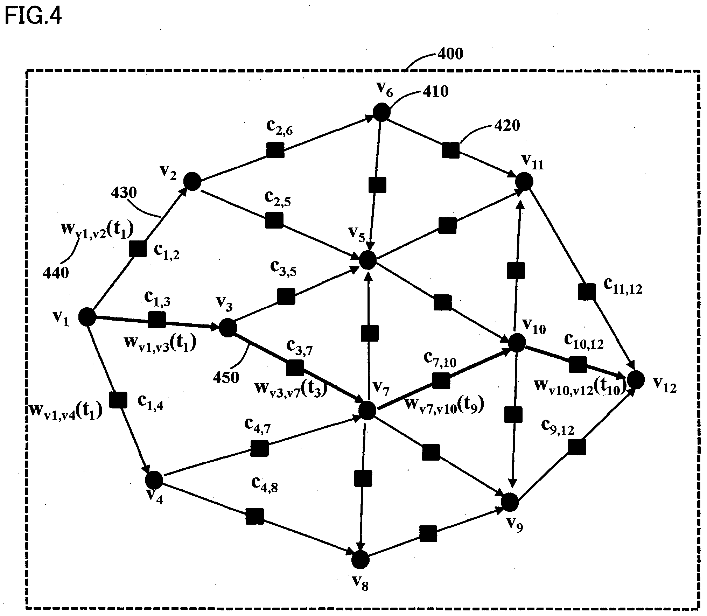

Figure 4 depicts a time-dependent graph to plan the route from departure point v1 to destination point v12, according to some embodiments of the present invention.

[Fig. 5A]

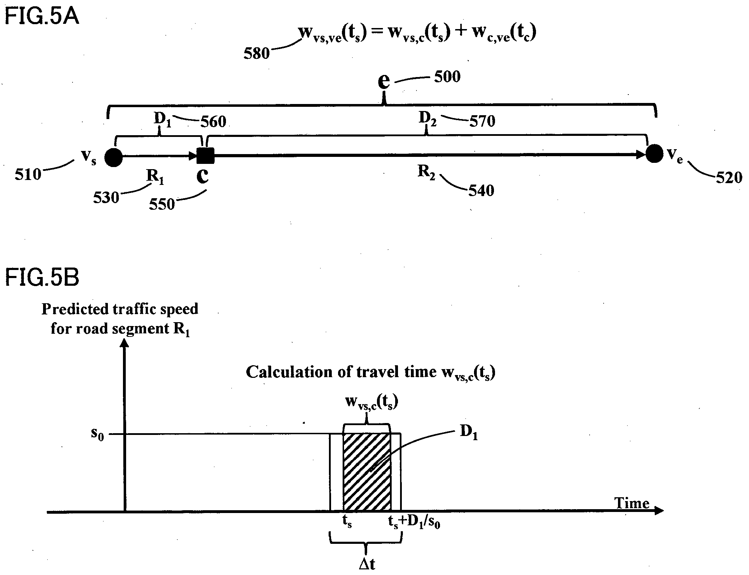

Figure 5A shows an example edge in the time-dependent graph and the travel time calculation according to some embodiments of the present invention, where the travel time represents the length of the edge in the time-dependent graph.

[Fig. 5B]
Figure 5B illustrates the travel time calculation on a short road segment of the edge in the time-dependent graph such that vehicles can travel though the road segment within one prediction time period, according to some embodiments of the present invention.

[Fig. 5C]

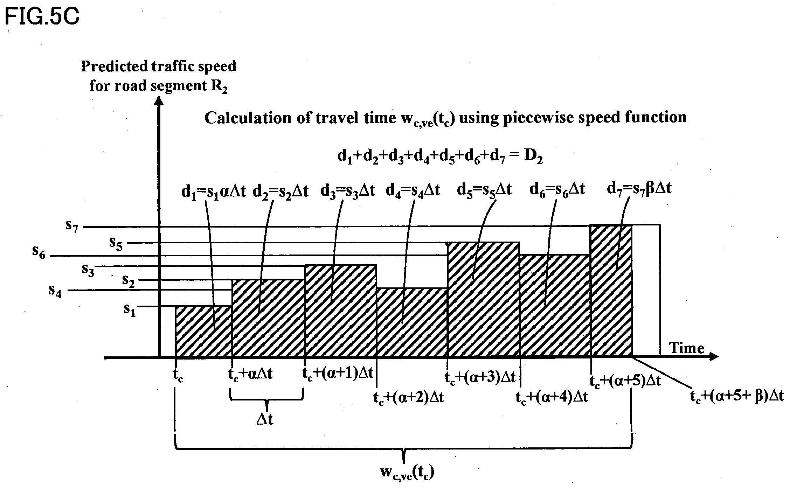

Figure 5C depicts the travel time calculation on a long road segment of the edge in the time-dependent graph such that vehicles need multiple prediction time periods to travel through the road segment, according to some embodiments of the present invention.

[Fig. 6]

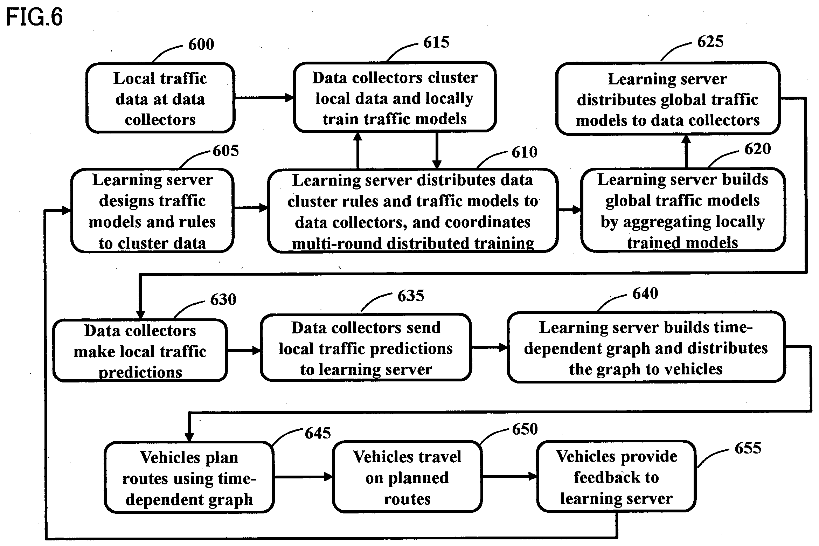

Figure 6 shows functional blocks and interaction among the components of the intelligent traffic system, according to some embodiments of the present invention.

[Fig. 7]

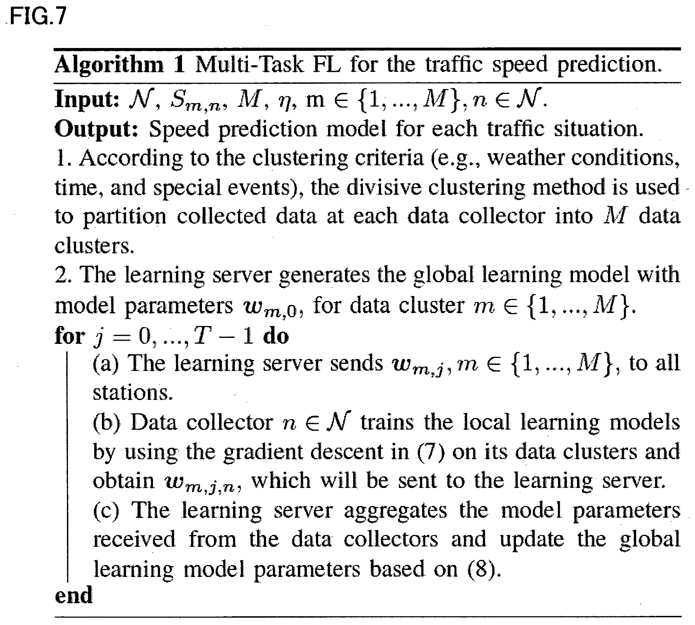

Figure 7 depicts multi-task federated learning algorithm for traffic speed prediction, according to some embodiments of the present invention.

[Fig. 8A]

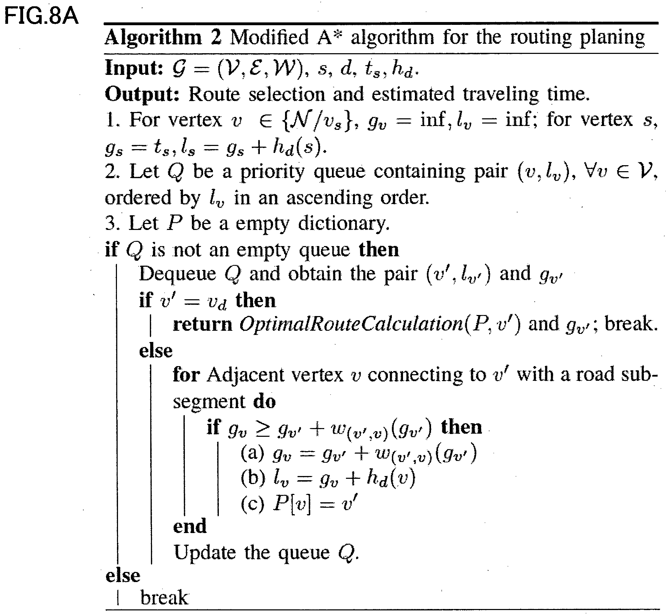

Figure 8A shows the modified A* algorithm for optimal route planning based on time-dependent graph, according to some embodiments of the present invention.

[Fig. 8B]

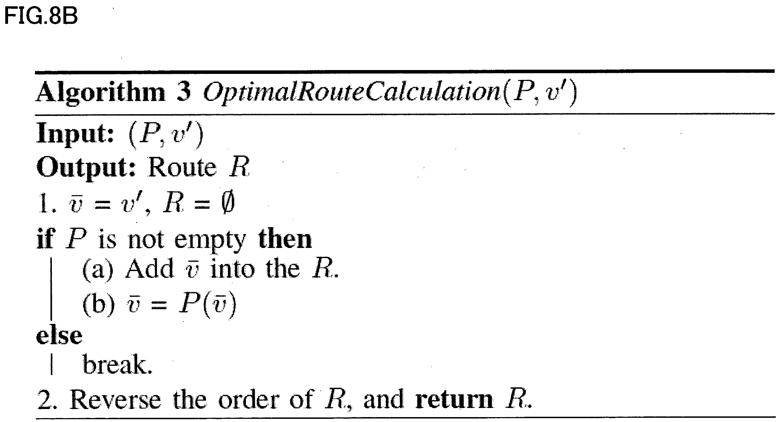

Figure 8B is the optimal route calculation algorithm used by the modified A* algorithm, according to some embodiments of the present invention.

[Description of Embodiments]

The following description provides exemplary embodiments only, and is not intended to limit the scope of the invention. Rather, the following description of the exemplary embodiments will provide those skilled in the art with an enabling description for implementing one or more exemplary embodiments. Contemplated are various changes that may be made in the function and arrangement of elements without departing from the scope of the present invention which is defined by the appended claims.

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed, but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, at least in part, either manually or automatically. Manual or automatic implementations may be executed, or at least assisted, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

To facilitate the development of intelligent transportation system (ITS), it is imperative to have an accurate prediction for the traffic conditions such as traffic flow and traffic speed. This is due to the fact that, such knowledge can help drivers make effective travel decisions so as to mitigate the traffic congestion, increase the fuel efficiency, and alleviate the air pollution. These promising benefits enable the traffic prediction to play major roles in the advanced traveler information system, the advanced traffic management system, and the commercial vehicle operation that the ITS target to achieve.

To reap all the aforementioned benefits, the traffic prediction must process the real-time and historical traffic data and observations collected by data collectors and mobile devices. For example, the inductive loop can measure the travel speed by reading the inductance changes over time and such data can be used for the traffic speed prediction. In addition, the wide use of mobile devices (e.g., on-board global position systems and phones) enables the mobility data to be crowdsourced from the general public, further facilitating the unprecedented traffic data collection. Such emerging big data can substantially augment the data availability in terms of the coverage and fidelity and significantly boost the data-driven traffic prediction. The prior art on the traffic prediction can be mainly grouped into two categories. The first category focus on using parametric approaches, such as autoregressive integrated moving average (ARIMA) model and Kalman filtering models. When dealing with the traffic only presenting regular variations, e.g., recurrent traffic congestion occurred in morning and evening rush hour, the parametric approaches can achieve promising prediction results. However, due to the stochastic and nonlinear nature of the road traffic, the traffic predictions of using the parametric approaches can deviate from the actual values especially in the abrupt traffic. Hence, instead of fitting the traffic data into a mathematical model as done by the parametric approach, an alternative way is using the nonparametric approaches where the machine learning (ML) based method is used. For example, a stacked autoencoder model can be used to learn the generic traffic flow features for the predictions. The long short-term memory (LSTM) recurrent neural network (RNN) can be used to predict the traffic flow, speed and occupancy, based on the data collected by the data collector and its upstream and downstream data collectors. Along with the use of RNN, the convolution neural network (CNN) can also be utilized to capture the latent traffic evolution patterns within the underlying road network.

Although the prior arts focus on using advanced deep learning models for the traffic prediction, all of them study the traffic variations with a single-task learning (STL) model. In reality, due to the varying weather, changing road conditions (such as road work and accidents) and special events (e.g., football games and concerts), the traffic patterns on the road can vary significantly under different situations. Hence, using a STL model is not able to capture such diverse and complex traffic situations. Moreover, due to the limited on-chip memory available at the data collector and mobile, the local training data can be extremely insufficient and a promising prediction performance cannot be achieved. In addition, the prior arts assume that the data collected by a data collector can be shared with other data collectors or a centralized unit, like the data collector accessing the data from its upstream and downstream data collectors. However, the collected data can contain the personal information, like the driving license plates captured by cameras and history trajectory of mobile phone users. In this case, directly sharing the traffic data among data collectors can raise the privacy concerns. Meanwhile, the communication cost is another major concern.

Figure 1 shows the intelligent vehicular transportation system 100 and its components as well as the interactions among the components of the system according to some embodiments of the current invention. The traffic system 100 includes road network 105, distributed data collectors 110, learning servers 115 and vehicles 120. The distributed data collectors 110 may be referred to as local traffic prediction agents (or learning agents) 110. Data collectors 110 are learning agents and deployed in the road network 105. The road network 105 consists of roads, roadside units, edge computing devices, etc. Vehicles 120 travel on the roads of the road network 105. The learning servers 115 can be located remotely or along roadside. The learning servers 115 design/update traffic models, data clustering rules and aggregate the trained traffic models and traffic prediction. The learning servers 115 distribute the data clustering rules to data collectors 110 to divide data at each data collector into different clusters via communication networks 112. The communication network 112, which can be wired network or wireless network, is configured to connect among the distributed data collectors 110 and the learning servers 115, among the learning servers 115 and the vehicles 120, among the distributed data collectors 110 and the road network 105, among the road network 105 and the vehicles 120, or any/all among combinations thereof. Further, the communication network 112 may be the 4th generation core networks or the 5th generation core networks or the beyond 5th generation core networks, and may connect to roadside units (RSUs/ DSRC (Dedicated Short Range Communications) transceiver) being arranged along roads or pedestrian passageways (not shown) or/and edge computing systems (not shown). In some cases, the roadside units may include cameras arranged on the road to monitor the vehicles traveling the roads or arranged on intersections monitoring pedestrians.

Learning servers 115 also distribute the traffic models to data collectors 110 for distributed training. Each data cluster is used to train a traffic model, e.g., rush hour data is used to train rush hour traffic model. Data collectors train traffic models using their local data and send locally trained traffic models to learning servers to build common global traffic models. Learning servers 115 distribute the final traffic models to data collectors 110 for traffic prediction. Each data collector predicts traffic on the road-segment where the data collector is located. Data collectors send their traffic predictions to learning servers, which then combine all traffic prediction to build the global traffic prediction for route planning. The global traffic prediction is distributed to vehicles 120 for route planning. When vehicles 120 travel on the planned routes, they can provide the learning servers with information such as traffic accident. The learning servers 115 can then coordinate data collectors to update traffic models.

**Multi-horizon Traffic Speed Prediction**

Consider a set of N data collectors where the data collector can be the toll station, loop detector, camera, etc. To capture the road traffic dynamics over time, data collector $n \in \{1,2, ..., N\}$ measures the average speed $x_n(t)$ at time t for all vehicles traversed in the past time period $\Delta t$ (e.g., $\Delta t = 5$ mins) and performs the speed prediction. Assume the data sample used for the prediction to be $(x_n(t+(1-1)\Delta t), x_n(t+(2-1)\Delta t), ..., x_n(t))$ with lag variable as l when the data collector n predicts the future speed at time t. Assume the multi-horizon speed prediction to be $(\hat{x}_n(t + \Delta t), \hat{x}_n(t + 2\Delta t), ..., \hat{x}_n(t + h\Delta t))$ with $\hat{x}_n(\cdot)$ as the predicted speed value and h as the maximum prediction time horizon.

To guarantee that the data collector can make accurate speed predictions, the data collectors use the machine learning model to train the local traffic data and solve the following optimization problem:

$$arg \min_{w} \sum_{i=1}^{S_n} f\left(w, x_{n,i}, y_{n,i}\right) \qquad (1)$$

where $S_n$ is the total number of training data samples within the local data at data collector n, $x_{n,i} = (x_{n,i}(t+(1-l)\Delta t), x_{n,i}(t+(2-l)\Delta t), ..., x_{n,i}(t))$ is the i-th input data sample, $y_{n,i} = (y_{n,i}(t+\Delta t), y_{n,i}(t+2\Delta t), ..., y_{n,i}(t+h\Delta t))$ is the i-th target output speed data, and $f(w, x_{n,i}, y_{n,i})$ is the loss function when the machine learning model with model parameters w is trained with data $(x_{n,i}, y_{n,i})$. The loss function plays a pivotal role in determining the machine learning performance, and the expression of the loss function is application specific. In the traffic prediction, the most common loss function is the mean squared error (MSE). For the purpose of traffic management such as route planning, the data collectors will send the speed predictions to the learning server over either wired network or wireless network. To avoid a large overhead over the learning server, the frequency that the data collectors share the forecast results with the learning server should be relatively low, e.g., 1 hour. As follows, the learning server can broadcast the road map with traffic predictions, e.g., time-dependent graph, to the vehicles operating within its coverage. The on-board unit (OBU) inside the vehicle can then choose the optimal route from its current location to the destination with the shortest travel time.

To tackle the insufficient local training data and protect data privacy, some embodiments of the current invention apply distributed machine learning technique to solve problem (1). There are different distributed machine learning techniques, some embodiments of the current invention use federated learning (FL) as an example to illustrate distributed machine learning approach. Traffic data collected by the data collectors can have a strong spatial-temporal dependence. To capture different traffic situations existing in the collected traffic data, a multi-task FL model is provided, in which different learning models are designed for different traffic situations, e.g., a rush hour model is different from an off hour model. Furthermore, these learning models may be correlated, e.g., off hour traffic can impact rush hour traffic.

To facilitate the multi-task learning, the training data are partitioned into different clusters such that each cluster corresponds to a learning model, e.g., rush hour data are used to train the rush hour model. Data clustering is important for many reasons, e.g., off hour data is not desirable to train rush hour traffic model, local traffic data is not suitable to train freeway traffic model. There are different ways to cluster data. Figure 2 illustrates a data clustering method 200 for traffic prediction, where location information is reflected by the location of the data collector 110. Different data collectors are located at different locations. The data 210 at a data collector is divided into summer data 220 and winter data 230. This level of data clustering reflects the weather. Each of summer data and winter data is divided into weekend data 240 and weekday data 250. This level of data clustering reflects day of week. Each of weekend data 240 and weekday data 250 is further divided into rush hour data 260 and off hour data 270.

The learning server and data collectors collaboratively train the multi-task FL models for traffic prediction. Assume data is portioned into M clusters. The objective of the multi-task FL is to solve the following optimization problem for each data cluster m:

$$arg \min_{w_m \in \mathbb{R}} F_m(w_m), \quad \forall m \in \{1,2, ..., M\} \qquad (2)$$

with $F_m(w_m)$ defined as

$$F_m(w_m) = \frac{1}{S_{(m)}} \sum_{n \in \{1,2,..,N\}} F_{m,n}(w_m) \qquad (3)$$

*where*

$$F_{m,n}(w_m) = \sum_{i=1}^{S_{m,n}} f(w_m, x_{m,n,i}, y_{m,n,i}) \qquad (4)$$

$$S_{(m)} = \sum_{n \in \{1,2,..,N\}} S_{m,n} \qquad (5)$$

$$w_m = (w_m^1, w_m^2, \dots, w_m^K) \qquad (6)$$

$(x_{m,n,i}, y_{m,n,i})$ is the i-th training data sample belonging to cluster m at data collector n with $S_{m,n}$ as the total number of such data samples. S(m) refers to the total number of training data samples belonging to cluster m across all data collectors, $F_{m,n}(w_m)$ denotes the loss function of cluster m at data collector n and K is the number of the model parameters.

To solve problem (2), the multi-task FL algorithm uses an iterative update scheme. Figure 7 shows a multi-task federated learning algorithm for traffic speed prediction, according to some embodiments of the present invention.

The learning server first generates an initial global learning model with model parameters as wm,0 for cluster m and sends wm,0 to the data collectors. At the first learning round, i.e., j = 1, all data collectors use the received model parameters wm,0 to update the learning models based on their own local data of cluster m by using the gradient descent:

$$w_{m,j,n} = w_{m,j-1} + \eta \nabla F_{m,n}(w_{m,j-1}), n \in \{1,2,\dots,N\} \qquad (7)$$

where $\eta$ is the learning rate. The data collectors will send their trained model parameters to the learning server, which will aggregate all the received local modal parameters to update the global model parameters, given by:

$$w_{m,j} = \frac{1}{S_{(m)}} \sum_{n \in \{1,2,..,N\}} S_{m,n} w_{m,j,n}, \qquad (8)$$

The global model parameters are then sent to data collectors for next round of learning. Each learning round will be followed by another round, and the same process repeats among the learning server and the data collectors in each round until the total loss function Fm(wm) for each cluster m is sufficiently small.

Figure 3A illustrates the traffic prediction architecture 300 using distributed multi-task learning techniques according to some embodiments of the current invention, where an infrastructure device acts as learning server 115 to coordinate a set of data collectors 110, which serve as learning agents. In the figure 3A, there are N data collectors, data collector 1 is a toll station, data collector 2 is a loop detector, and data collector N is a camera. The learning server 115 designs M traffic models 310 such that each traffic model is targeted for a specific task, e.g., a model for rush hour traffic and another traffic model for off hour traffic, a model for city traffic and another model for freeway traffic. Therefore, these traffic models are different but correlated because traffic at one location can impact on traffic at other locations and traffic at one can impact on traffic at another time. Accordingly, the learning server 115 defines data clustering rules 320 to divide data into M clusters 330. The learning server 115 then distributes the rules 320 and traffic models 310 to data collectors 110. Correspondingly, each data collector 110 divides its data into M clusters 330. It is possible that some of data clusters are empty. In that case, the data collector will not train corresponding traffic model. In the figure 3A, data collector 1 has all data clusters, data collector 2 does not have cluster-M data and, and data collector N does not have cluster-1 data. As a result, data collector 1 will train all traffic models, data collector 2 does not train traffic model M, and data collector N does not train traffic model 1. After clustering its data, each data collector 110 starts the first round of the distributed training. Each data collector 110 trains the received traffic models independently by using its own data without sharing its data with other data collectors and learning server. After certain iterations of training, each data collector sends the locally trained traffic models 340 to the learning server, which then aggregates the received traffic models from all data collectors to generate the common global traffic models 350. Upon completion of the model aggregation, the learning server 115 re-distributes the aggregated traffic models 350 to data collectors for the second round of training. This process of training and aggregation continues until the robust traffic models are built. Once the final traffic models are built, the learning server 115 distributes the models to data collectors 110 for traffic prediction. The predicted traffic depends on applications and can be velocity, traffic flow, number of specific vehicles, etc. For route planning application, the traffic speed is predicted. Finally, data collectors send their local traffic predictions 360 to the learning server to build a global traffic prediction model, i.e., time-dependent graph, that is then distributed to vehicles 120 for route planning.

The traffic prediction is characterized by two parameters, prediction time horizon and prediction period. The prediction time horizon represents the farthest time the traffic is predicted and prediction period indicates how often the traffic is predicted within a prediction time horizon. Prediction periods make up a prediction time horizon. Figure 3B shows an example of prediction time horizon 370 that consists of six prediction periods 380 according to some embodiments of the present invention. Even the longer time horizon provides more traffic predictions, the shorter time horizon gives more accurate traffic predictions. Because with a longer prediction time horizon, a longer traffic series in further future needs to be predicted. Such expansion on the prediction time horizon will inevitably degrade the prediction performance.

Figure 3C shows a schematic illustrating an example of a traffic prediction architecture 300 that includes the learning server 115 connected to the distributed data collectors (learning agents) 110 via the communication network(s) 112, according to some embodiments of the present invention.

The learning server 115 may be referred to as a distributed machine learning based traffic predication server. The learning server 115 is configured to provide map information with respect to traffic predictions to vehicles 120 traveling on a road network. The learning server 115 may include one or more processors 121, a memory 140, a memory unit/storage 200 configured to store traffic prediction neural networks 132, traffic data cluster rules 134, global time-dependent map 135, trained multi-task traffic models 136, global map of road network 137, an input interface (or transceiver) 150 configured to communicate with the learning agent 110 via the communication network 112 and update model parameters of the traffic prediction neural networks 132. The trained multi-task traffic models 136 may be the traffic models 310 shown in Figure 3A.

The learning server 115 is configured to update the parameters of the traffic prediction neural networks 132 by acquiring the trained parameters of the trained multi-task traffic models 173 that have been trained by the learning agents 110 via the input interface 150 and the communication network 112. This update process is iteratively continued based on every predetermined elapsed time periods.

In this case, each of the learning agents 110 is arranged at a location on the road network 105 and is configured to locally train multi-task traffic models 174 by collecting traffic data (traffic patterns of vehicles) and clustering traffic data at the arranged location. Further, the learning server 115 generates a global time-dependent traffic map 135 based on the updated-trained multi-task traffic models 136 and distributes the global time-dependent traffic map 135 to vehicles 120, which then determine the optimal routes based on their own driving plans by using the modified A* algorithm shown in Figures 8A and 8B and the global time-dependent traffic map 135. An optimal route is a driving route on road network 105 from vehicle's current location to its destination with the least travel time.

Each of the learning agents 110 may include an interface/transceiver 151 configured to perform data communication with the learning server 115 via the communication network 112. Each learning agent 110 further includes one or more processors 160, a memory 180 connected to a memory unit/storage 170 storing traffic data 171, traffic prediction neural networks 173, trained multi-task traffic models 174, local map of road network 175 and a local time-dependent map 172.

In some cases, a computer-implemented distributed machine learning based traffic prediction method can be provided for predicting traffic of roads by using one or more hardware that include one or more processors in connection with a memory/memory unit/storage storing instructions/programs that cause the one or more processors to perform steps. The steps may include distributing global multi-task traffic models 136 to the learning agents 110 the learning server 115 via the communication network 112. Each of the learning agents 110 is configured to locally train the traffic models 136 (310) based on the data signals acquired from the road sub-segments 190, the edge computing devices 185 and the vehicles 120 traveling on the roads. The steps further include uploading/acquiring the locally trained traffic models 173 trained by the learning agents 110 from the learning agents 110 to the learning server 115, updating the global multi-task traffic models 136 by the learning server 115 using the locally trained traffic model parameters of the trained multi-task traffic models 174. The steps further include generating a time-dependent global traffic map 135 by the learning server 115 using the well trained global multi-task traffic models 136, distributing the time-dependent global traffic map 135 to each of the vehicles 120 traveling on the roads, and computing an optimal travel route with the least travel time by each of the vehicles 120 using the time-dependent global traffic map 135 based on a driving plan of each of the vehicles 120.

**Optimal Route Planning Based on Predicted Travel Time**

Traffic speed on a road network varies as the time, e.g., rush hour traffic speed is lower than off hour traffic speed in general. Therefore, traffic map can be modeled as time-dependent graph by using physical road network and the predicted traffic speed. To build the time-dependent graph, the learning server uses the multi-horizon speed predictions from traffic data collectors and divides the road segments into multiple sub-segments such that the traffic of each road sub-segment is predicted by a unique data collector exclusively located at the sub-segment. Then, the road network is modeled as a time-dependent graph G = (V, ε, W), where the set V of vertices includes the intersections and connecting points of any two adjoining road sub-segments, the edge set ε is thereby the road sub-segments connecting two adjacent vertices and W is the weight set. For an edge e ∈ ε, the weight we(t) ∈ W is modeled as the travel time on the edge e at time t, calculated as the ratio between the length of the road sub-segment and the predicted speed. For instance, a road sub-segment 190 in road network 105 can be a road section on a single road or multiple connected road sections of on multiple roads. Different from the static graph where the weight associated to each edge is a constant value, the counterpart within the graph G is a time-varying variable due to the time-varying speed, e.g., the piecewise linear speed as shown in Figure 5C, to traverse each road sub-segment. Different from static graph built based on road map and distance, the vertices can be dynamically selected so that they are not fixed points in road network as long as there is at least data collector between any two vertices. Accordingly, an edge in the time-dependent graph may consist of multiple road-segments. Most importantly, the length of the edge is not the physical distance, instead it is the travel time on the edge. As a result, when traffic condition changes, the length of the edge also changes, e.g., the length of same edge may be much longer in rush hour than in off hour. Finally, the learning server distributes the time-dependent graph to vehicles in its communication coverage for route planning.

Figure 4 shows an example of time-dependent graph 400 according to some embodiments of the present invention. In this case, vertices 410 are represented by $v_1$, $v_2$, etc., there is a data collector 420 between any two vertices, the length of each edge 430 is denoted as $w_{x,y}(t_x)$ 440 with x denotes starting vertex, y denotes ending vertex and time $t_x$ denotes the time the vehicle leaves vertex x. In the figure, the vehicle departures from vertex $v_1$ and destines to the vertex $v_{12}$. It can be seen that there are many different routes from vertex $v_1$ to vertex $v_{12}$. The route planning is to find a route with the minimum travel time. In the figure, route 450 represents the minimum travel time route, on which vehicle departures from $v_1$ at time $t_1$ and arrives at $v_3$ at time $t_3$, departures from $v_3$ at time $t_3$ and arrives at $v_7$ at time $t_7$, departures from $v_7$ at time $t_7$ and arrives at $v_{10}$ at time $t_{10}$, and finally, departures from $v_{10}$ at time $t_{10}$ and arrives at the destination $v_{12}$ at time $t_{12}$. The data collector $c_{1,3}$ is located on the edge from $v_1$ to $v_3$, the data collector $c_{3,7}$ is located on the edge from $v_3$ to $v_7$, the data collector $c_{7,10}$ is located on the edge from $v_7$ to $v_{10}$, and the data collector $c_{10,12}$ is located on the edge from $v_{10}$ to $v_{12}$.

According to the time-dependent graph G, the vehicle can determine the route ($\bar{v}_1 = s$, $\bar{v}_2$, ..., $\bar{v}_i$, $\bar{v}_{i+1}$, ..., $\bar{v}_k = d$) leaving the current location s at time $t_s$ to the destination d with the least travel time as follows:

$$\arg \min_{(\bar{v}_1,...,\bar{v}_k)} t_d(s, t_s) - t_s, \qquad (9)$$

s.t.

$$t_1 = t_s, \qquad\qquad\qquad (10)$$

$$t_{i+1} = t_i + w_{(\bar{v}_i, \bar{v}_{i+1})}(t_i), i \in \{1, 2, ..., k-1\}, \qquad (11)$$

where $t_d(s,t_s)$ denotes travel time leaving location s at time $t_s$ to destination location d, the constraint (10) is due to the fact that the vehicle departures s at time $t_s$ and the constraint (11) represents that the arrival time at $\bar{v}_{i+1}$ equals the sum of the departure time at $\bar{v}_i$ and the travel time on road sub-segment ($\bar{v}_i$, $\bar{v}_{i+1}$) at time $t_i$. Solving optimization problem in (9) is different from the route planning problem in a static graph, the optimization problem (9) focuses on a time-dependent graph where the weights are time-varying.

Figure 8A shows the modified A* algorithm for optimal route planning based on time-dependent graph, and Figure 8B is the optimal route calculation algorithm used by the modified A* algorithm, according to some embodiments of the present invention. A modified A* algorithm is configured to find the optimal route with the least travel time. Within the searching algorithm, the arrival time $g_v$ and the heuristic total travel time $l_v$, $v \in V$, are initially set to infinity with the exception of the starting point s with $g_s = t_s$ and $l_s = g_s + h_d(g_s)$. The heuristic total travel time is defined as the sum of arrival time and heuristic travel time $h_d$ to the destination. The heuristic travel time $h_d$ to the destination is calculated as the ratio between the Euclidean distance to the destination and the maximum speed. Then, the searching process in the modified A* algorithm begins with the starting point s and extend to the adjacent vertices that have adjoining road sub-segments with s. For these adjacent vertices, their arrival time g will be updated by comparing the most recently assigned arrival time with the arriving time when taking the route from the starting point s. Meanwhile, their heuristic total travel time l is updated as well. Next, the vertex with the least heuristic total travel time within the neighboring vertices will be selected to continue the searching process. The same process will be repeated. Finally, when reaching the destination point d, the searching process stops and return the optimal route selection and its travel time estimation.

The key for time-dependent graph based route planning is to compute the length of the route, i.e., the travel time on the route. Unlike existing route planning methods that use present traffic conditions to plan route, the embodiments of the current invention use the traffic prediction to make optimal route planning. For an edge in the time-dependent graph 400, the corresponding data collector predicts traffic speed every $\Delta t$ time period. Therefore, the length of the edge, i.e., the travel time, is dynamically computed using traffic predictions. As a result, the length of the edge in time-dependent graph varies as time changes and therefore, the shape of graph changes as well, which indicates that travel time on a route also changes with the time.

There are different ways to calculate travel time on a road segment. Figures 5A, 5B and 5C show a way to calculate travel time by using predicted piecewise linear traffic speed function, according to some embodiments of the present invention. Figure 5A shows an edge e 500 in the time-dependent graph 400, where the start vertex of the edge is $v_s$ 510 and the end vertex of the edge is $v_e$ 520. The edge e consists of two road segments $R_1$ 530 and $R_2$ 540. These two road segments are connected by a data collector 550, which predicts traffic speed for both road segments $R_1$ and $R_2$. The road segment $R_1$ is short such that vehicles can pass through $R_1$ with less than one $\Delta t$ time period and its physical distance is $D_1$ 560. The road segment $R_2$ is long such that vehicles need more than one $\Delta t$ time period to pass through R2, e.g., 7 $\Delta t$ time periods, and its physical distance is $D_2$ 570. Assume a vehicle arrives at vertex $v_s$ at time $t_s$ and passes through $R_1$ within one prediction time period $\Delta t$. The predicted traffic speed at time $t_s$ is $s_0$. Thus, the travel time on road segment $R_1$ is $D_1/s_0$. As a result, the vehicle arrives at data collector 550 at time $t_c = t_s + D_1/s_0$. Therefore, the length $w_{vs,ve}(t_s)$ 580 of the edge $\varepsilon$ in the time-dependent graph can be calculated as $w_{vs,ve}(t_s) = w_{vs,c}(t_s) + W_{c,ve}(t_c)$, where $w_{vs,c}(t_s) = D_1/s_0$ as shown in Figure 5B. The calculation of $w_{c,ve}(t_c)$ is illustrated in Figure 5C, where vehicle arrives at data collector at time $t_c$. Assume the time $t_c$ is within a prediction period. The length $w_{c,ve}(t_c)$ is computed using a piecewise speed function, where $s_1$ is the predicted speed at time $t_c$ and vehicle only travels $\alpha\Delta t$ time in the first prediction period with $0 < \alpha < 1$, $s_2$ is the predicted speed at time $t_c+\alpha \Delta t$, $s_3$ is the predicted speed at time $t_c+(\alpha+1)\Delta t$, $s_4$ is the predicted speed at time $t+(\alpha+2)\Delta t$, $s_5$ is the predicted speed at time $t+(\alpha+3)\Delta t$, $s_6$ is the predicted speed at time $t+(\alpha+4)\Delta t$ and, and finally, $s_7$ is the predicted speed at time $t+(\alpha +5)\Delta t$ and vehicle only travels $\beta\Delta t$ in the last prediction period with $0 < \beta < 1$. Therefore, the travel time $w_{c,ve}(t_c)$ on the road segment $R_2$ equals to $(\alpha+5+\beta)\Delta t$. Accordingly, the travel distance in the first prediction period is $d_1 = \alpha\Delta t^* s_1$, the travel distance in the second prediction period is $d_2 = \Delta t^* s_2$, the travel distance in the third prediction period is $d_3 = \Delta t^* s_3$, the travel distance in the fourth prediction period is $d_4 = \Delta t^* s_4$, the travel distance in the fifth prediction period is $d_5 = \Delta t^* s_5$, the travel distance in the sixth prediction period is $d_6 = \Delta t^* s_6$, and the travel distance in the last prediction period is $d_7 = \beta\Delta t^* s_7$. Summation of these distances equals to the physical distance of road segment $R_2$, i.e., $d_1+d_2+d_3+d_4+d_5+d_6+d_7 = D_2$. Finally, the length of the edge $\varepsilon$ $w_{vs,ve}(t_s) = D_1/s_0 + d_1/s_1+d_2/s_2+d_3/s_3+d_4/s_4+d_5/s_5+d_6/s_6+d_7/s_7 = D_1/s_0 + (\alpha+5+\beta)\Delta t$.

Figure 6 shows functional blocks and interaction among the components of the intelligent traffic system 100 shown in Figure 1 according to some embodiments of the current invention, where each data collector 110 has a local database 600 and learning server 115 designs 605 traffic models and corresponding rules to cluster data. The learning server then distributes 610 the data clustering rules and traffic models to data collectors and coordinates multiple round of distributed training. Upon receiving the rules and traffic models, each data collector 615 clusters its local data and trains the traffic models using its local data as shown in Figure 2. After completion of the distributed training, the learning server builds 620 global traffic models by aggregating locally trained traffic models. The learning server then distributes 625 global traffic models to data collectors, which make 630 local traffic predictions. The local traffic predictions are sent 635 to learning server. The learning server builds time-dependent graph 640 by using road network 105 and traffic predictions from data collectors and distributes the time-dependent graph to vehicles 120 for route planning. The vehicles plan 645 their routes for the minimum travel time by using time-dependent graph. The vehicles travel 650 on planned routes to arrive at destinations with the minimum travel time. When vehicles travel on their planned routes, certain unexpected events such as new road construction and traffic accident can occur. If observed events cause travel time mismatch with the planned travel time, vehicles can feedback 655 these events to the learning server to update the traffic prediction.

The above-described embodiments of the present disclosure can be implemented in any of numerous ways. For example, the embodiments may be implemented using hardware, software or a combination thereof.

Although, the present disclosure has been described with reference to certain preferred embodiments, it is to be understood that various other adaptations and modifications can be made within the scope of the present invention which is defined by the following appended claims.

Also, the embodiments of the present disclosure may be embodied as a method or a computer-implemented method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

**Claims**

1. A computer-implemented distributed machine learning based traffic prediction method for predicting traffic of roads, comprising:

    distributing (610) global multi-task traffic models by a learning server to learning agents to locally train the traffic models;

uploading (625) locally trained global multi-task traffic models to the learning server, wherein the locally trained global multi-task traffic models have been trained by the learning agents;

updating (640) the global multi-task traffic models by the learning server using the locally trained global multi-task traffic models uploaded from the learning agents; and

generating (640) a time-dependent global traffic map by the learning server using the updated global multi-task traffic models;

wherein the learning server and learning agents collaboratively build the time-dependent global traffic map, wherein the time-dependent global traffic map is modeled as a time-dependent graph; and

wherein each edge of the time-dependent graph is the predicted directional travel time on a road-segment connecting two vertices of the graph;

wherein the learning server distributes the trained global traffic models to learning agents for travel time prediction;

wherein the method further comprises distributing (640) the time-dependent global traffic map to each of vehicles traveling on the roads; and

wherein each learning agent computes travel time on road-segments by predicting traffic speed using global traffic models and its local data, wherein a weight of each edge of the time-dependent graph is modeled as the directional travel time on the road segment at a time t, calculated as the ratio between the length of the road segment and the predicted speed, wherein the traffic speed prediction is multi-horizon by predicting short time horizon traffic speed, middle time horizon traffic speed and long time horizon traffic speed, wherein a prediction time horizon consists of multiple prediction time periods, a prediction time horizon represents the farthest time the traffic is predicted, the prediction period indicating how often the traffic is predicted within a prediction time horizon.

2. The method of claim 1, wherein a learning server designs the global multi-task traffic models in the form of traffic prediction neural networks, wherein a learning server is a roadside unit or an eNodeB or cloud.

3. The method of claim 1, wherein distributed learning agents train (615) the global multi-task traffic models by using their own local data, wherein the learning agents are infrastructure data collectors, wherein each data collector is located on road networks and configured to collect traffic data at the arranged location.

4. The method of claim 1, wherein the learning server is configured to design data cluster rules and distribute data cluster rules to the learning agents; and
wherein each learning agent is configured to cluster its local data using rules distributed.

5. The method of claim 1, wherein the distributed multi-task machine learning is performed multiple rounds, wherein in each round, the learning server distributes the updated traffic models to the learning agents, wherein each learning agent trains the received traffic models for multiple iterations using its local data, wherein each learning agent uploads locally trained traffic models onto the learning server, wherein the learning round continues until the traffic models are well-trained.

6. The method of claim 1, wherein a vehicle uses time-dependent graph to determine a route $(\bar{v}_1 = s, \bar{v}_2, ..., \bar{v}_i, \bar{v}_{i+1}, ..., \bar{v}_k = d)$ leaving the current location s at time $t_s$ to the destination d with the least travel time by solving following optimization problem

$$\arg \min_{(\bar{v}_1,...,\bar{v}_k)} t_d(s, t_s) - t_s,$$

s.t.

$$t_1 = t_s,$$

$$t_{i+1} = t_i + w_{(\bar{v}_i, \bar{v}_{i+1})}(t_i), i \in \{1,2,...,k-1\},$$

where $t_d(s,t_s)$ denotes travel time leaving location s at time $t_s$ to destination location d, the first constraint is due to the fact that the vehicle departures s at time $t_s$ and the second constraint shows that the arrival time at vertex $\bar{v}_{i+1}$ equals

the sum of the departure time at $\bar{v}_i$ and the travel time on road sub-segment $(\bar{v}_i, \bar{v}_{i+1})$ at time $t_i$.

7. The method of claim 1, wherein the road networks are generated by converting a map stored in a map server, wherein the map is provided so as to cover a large scale geometric region such as a city.

8. The method of claim 7, wherein the road networks are converted to a time-dependent graph based on the well-trained traffic prediction neural networks.

9. The method of claim 1, wherein each learning agent trains traffic prediction neural networks corresponding different traffic tasks.

10. The method of claim 1, wherein the distributed machine learning is realized by federated learning, FL, technique.

11. A distributed machine learning based traffic predication system (300) for providing traffic prediction to vehicles traveling on a road network, comprising:

a plurality of learning agents (110);
at least one learning server (115); and
a communication network (112) configured to connect the plurality of learning agents (110) and the at least one learning server (115), at least one roadside unit (190) and vehicles (120) traveling the road network;
wherein each learning agent of the plurality of learning agents (110) comprises:

an interface (151) configured to collect local traffic data from sensors arranged on the road network, wherein the interface (151) is configured to acquire multi-task traffic models and data cluster rules from the at least one learning server (115) via the communication network (112);
a memory (170) configured to store the local traffic data, the data cluster rules and trained traffic models, traffic prediction neural networks;
a processor (160), in connection with the memory (170), configured to:

locally train the traffic prediction neural networks to update the acquired multi-task traffic models of the traffic prediction neural networks using the local traffic data based on the data cluster rules; and
upload the updated locally trained multi-task traffic models to the at least one learning server via the interface (151) using the communication network (112); and

wherein the at least one learning server (115) comprises:

a transceiver (150) configured to acquiring trained multi-task parameters of traffic prediction neural networks from the plurality of learning agents (110) via the communication network (112), wherein each learning agent of the plurality of learning agents (110) is arranged at a location on the road network;
a further memory (140) configured to store traffic data, a global time-dependent map, traffic prediction neural networks, trained multi-task traffic models and the map of road network;
one or more further processor (121), in connection with the further memory (140), configured to perform steps of:

updating of the traffic prediction neural networks using the trained multi-task parameters;
generating an updated global time-dependent traffic map based on the trained multi-task traffic models; and
distributing the data clustering rules to the plurality of learning agents (110);

wherein the at least one learning server (115) and the plurality of learning agents (110) are configured to collaboratively build the time-dependent global traffic map, wherein the time-dependent global traffic map is modeled as a time-dependent graph; and
wherein each edge of the time-dependent graph is the predicted directional travel time on a road-segment connecting two vertices of the graph;
wherein the at least one learning server (115) is configured to distribute the trained global traffic models to learning agents for travel time prediction;
wherein the one or more further processor (121), in connection with the further memory (140), is further configured to distribute the updated global time-dependent traffic map to the vehicle traveling on the road network; and

wherein each learning agent is configured to compute travel time on road-segments by predicting traffic speed using global traffic models and its local data, wherein a weight of each edge of the time-dependent graph is modeled as the directional travel time on the road segment at a time t, calculated as the ratio between the length of the road segment and the predicted speed, wherein the traffic speed prediction is multi-horizon by predicting short time horizon traffic speed, middle time horizon traffic speed and long time horizon traffic speed, wherein a prediction time horizon consists of multiple prediction time periods, a prediction time horizon represents the farthest time the traffic is predicted, the prediction period indicating how often the traffic is predicted within a prediction time horizon.

**Patentansprüche**

1. Computerimplementiertes-Verteiltes-Maschinenlernbasiertes-Verkehrsprognoseverfahren zum Prognostizieren von Verkehr auf Straßen, umfassend:

   Verteilen (610) von globalen Multi-Task-Verkehrsmodellen durch einen Lernserver an Lernagenten, um die Verkehrsmodelle lokal zu trainieren;
   Hochladen (625) von lokal trainierten globalen Multi-Task-Verkehrsmodellen auf den Lernserver, wobei die lokal trainierten globalen Multi-Task-Verkehrsmodelle von den Lernagenten trainiert wurden;
   Aktualisieren (640) der globalen Multi-Task-Verkehrsmodelle durch den Lernserver unter Verwendung der lokal trainierten globalen Multi-Task-Verkehrsmodelle, die von den Lernagenten hochgeladen wurden; und
   Generieren (640) einer zeitabhängigen globalen Verkehrskarte durch den Lernserver unter Verwendung der aktualisierten globalen Multi-Task-Verkehrsmodelle;
   wobei der Lernserver und die Lernagenten kollaborativ die zeitabhängige globale Verkehrskarte aufbauen, wobei die zeitabhängige globale Verkehrskarte als ein zeitabhängiger Graph modelliert ist; und
   wobei jede Kante des zeitabhängigen Graphen die prognostizierte direktionale Fahrzeit auf einem Straßensegment ist, das zwei Knoten des Graphen verbindet;
   wobei der Lernserver die trainierten globalen Verkehrsmodelle an Lernagenten zur Fahrzeitprognose verteilt;
   wobei das Verfahren ferner Verteilen (640) der zeitabhängigen globalen Verkehrskarte an jedes der auf den Straßen verkehrenden Fahrzeuge umfasst; und
   wobei jeder Lernagent eine Fahrzeit auf Straßensegmenten durch Prognostizieren einer Verkehrsgeschwindigkeit unter Verwendung globaler Verkehrsmodelle und seiner lokalen Daten berechnet, wobei eine Gewichtung jeder Kante des zeitabhängigen Graphen als die direktionale Fahrzeit auf dem Straßensegment zu einem Zeitpunkt t modelliert wird, welche als das Verhältnis zwischen der Länge des Straßensegments und der prognostizierten Geschwindigkeit berechnet wird, wobei die Verkehrsgeschwindigkeitsprognose ein durch Prognostizieren einer Verkehrsgeschwindigkeit mit kurzem Zeithorizont, einer Verkehrsgeschwindigkeit mit mittlerem Zeithorizont und einer Verkehrsgeschwindigkeit mit langem Zeithorizont ein Multi-Horizont ist, wobei ein Prognosezeithorizont aus mehreren Prognosezeitperioden gebildet ist, ein Prognosezeithorizont die am weitesten entfernte Zeit darstellt, zu welcher der Verkehr prognostiziert wird, und die Prognoseperiode angibt, wie oft der Verkehr innerhalb eines Prognosezeithorizonts prognostiziert wird.

2. Verfahren nach Anspruch 1, wobei ein Lernserver die globalen Multi-Task-Verkehrsmodelle in Form von neuronalen Netzen zur Verkehrsprognose entwirft, wobei ein Lernserver eine straßenseitige Einheit oder ein eNodeB oder eine Cloud ist.

3. Verfahren nach Anspruch 1, wobei verteilte Lernagenten die globalen Multi-Task-Verkehrsmodelle unter Verwendung ihrer eigenen lokalen Daten trainieren (615), wobei die Lernagenten Infrastruktur-Datensammler sind, wobei sich jeder Datensammler in Straßennetzen befindet und konfiguriert ist, Verkehrsdaten an der Anordnungsposition zu sammeln.

4. Verfahren nach Anspruch 1, wobei der Lernserver konfiguriert ist, Datenclusterregeln zu entwerfen und Datenclusterregeln an die Lernagenten zu verteilen; und
   wobei jeder Lernagent konfiguriert ist, seine lokalen Daten unter Verwendung von verteilten Regeln zu clustern.

5. Verfahren nach Anspruch 1, wobei das verteilte Multi-Task-Maschinenlernen in mehreren Runden durchgeführt wird, wobei in jeder Runde der Lernserver die aktualisierten Verkehrsmodelle an die Lernagenten verteilt, wobei jeder Lernagent die empfangenen Verkehrsmodelle für mehrere Iterationen unter Verwendung seiner lokalen Daten trainiert, wobei jeder Lernagent lokal trainierte Verkehrsmodelle auf den Lernserver hochlädt, wobei die Lernrunde fortgesetzt wird, bis die Verkehrsmodelle gut trainiert sind.

6. Verfahren nach Anspruch 1, wobei ein Fahrzeug anhand eines zeitabhängigen Graphen eine Route $(\overline{v}_1 = s, \overline{v}_2, ..., \overline{v}_i, \overline{v}_{i+1}, ..., \overline{v}_k = d)$ verlassend die aktuelle Position s zu dem Zeitpunkt $t_s$ zu dem Ziel d mit der geringsten Fahrzeit bestimmt, indem folgendes Optimierungsproblem gelöst wird

$$\arg \min_{(\overline{v}_1, ..., \overline{v}_k)} t_d(s, t_s) - t_s,$$

s.t.

$$t_1 = t_s,$$

$$t_{i+1} = t_i + w_{(\overline{v}_i, \overline{v}_{i+1})}(t_i), i \in \{1, 2, ..., k-1\},$$

wobei $t_d(s,t_s)$ die Fahrzeit verlassend Position s zu dem Zeitpunkt $t_s$ zu der Zielposition d bezeichnet, die erste Nebenbedingung auf der Tatsache beruht, dass das Fahrzeug zu dem Zeitpunkt $t_s$ abfährt, und die zweite Nebenbedingung zeigt, dass die Ankunftszeit an dem Knoten $\overline{v}_{i+1}$ gleich der Summe der Abfahrtszeit an $\overline{v}_i$ und der Fahrzeit auf dem Straßen-Untersegment $(\overline{v}_i, \overline{v}_{i+1})$ zu dem Zeitpunkt $t_i$ ist.

7. Verfahren nach Anspruch 1, wobei die Straßennetze durch Konvertieren einer in einem Kartenserver gespeicherten Karte generiert werden, wobei die Karte bereitgestellt wird, um eine großflächige geometrische Region wie eine Stadt abzudecken.

8. Verfahren nach Anspruch 7, wobei die Straßennetze auf der Grundlage der gut trainierten neuronalen Netze zur Verkehrsprognose in einen zeitabhängigen Graphen konvertiert werden.

9. Verfahren nach Anspruch 1, wobei jeder Lernagent neuronale Netze zur Verkehrsprognose trainiert, die verschiedenen Verkehrsaufgaben entsprechen.

10. Verfahren nach Anspruch 1, wobei das verteilte Maschinenlernen durch die Technik des Föderalen Lernens, FL, realisiert wird.

11. Verteiltes-Maschinenlernbasiertes-Verkehrsprognosesystem (300) zur Bereitstellung einer Verkehrsprognose für Fahrzeuge, die auf einem Straßennetz verkehren, umfassend:

   eine Vielzahl von Lernagenten (110);
   zumindest einen Lernserver (115); und
   ein Kommunikationsnetz (112), das konfiguriert ist, die Vielzahl von Lernagenten (110) und den mindestens einen Lernserver (115), mindestens eine straßenseitige Einheit (190) und Fahrzeuge (120), die das Straßennetz befahren, miteinander zu verbinden;
   wobei jeder Lernagent der Vielzahl von Lernagenten (110) umfasst:

      eine Schnittstelle (151), die konfiguriert ist, lokale Verkehrsdaten von Sensoren zu sammeln, die auf dem Straßennetz angeordnet sind, wobei die Schnittstelle (151) konfiguriert ist, Multi-Task-Verkehrsmodelle und Datenclusterregeln von dem mindestens einen Lernserver (115) über das Kommunikationsnetz (112) zu erwerben;
      einen Speicher (170), der konfiguriert ist, die lokalen Verkehrsdaten, die Datenclusterregeln, trainierte Verkehrsmodelle und neuronale Netze zur Verkehrsprognose zu speichern;
      einen Prozessor (160), der mit dem Speicher (170) in Verbindung steht, der konfiguriert ist:

         die neuronalen Netze zur Verkehrsprognose lokal zu trainieren, um die erworbenen Multi-Task-Verkehrsmodelle der neuronalen Netze zur Verkehrsprognose unter Verwendung der lokalen Verkehrsdaten auf der Grundlage der Datenclusterregeln zu aktualisieren; und
         die aktualisierten lokal trainierten Multi-Task-Verkehrsmodelle zu dem mindestens einen Lernserver über die Schnittstelle (151) unter Verwendung des Kommunikationsnetzes (112) hochzuladen; und

wobei der zumindest eine Lernserver (115) umfasst:

einen Transceiver (150), der konfiguriert ist, trainierte Multi-Task-Parameter von neuronalen Netzen zur Verkehrsprognose von der Vielzahl von Lernagenten (110) über das Kommunikationsnetz (112) zu erwerben, wobei jeder Lernagent der Vielzahl von Lernagenten (110) an einer Position auf dem Straßennetz angeordnet ist;

einen weiteren Speicher (140), der konfiguriert ist, Verkehrsdaten, eine globale zeitabhängige Karte, neuronale Netze zur Verkehrsprognose, trainierte Multi-Task-Verkehrsmodelle und die Karte des Straßennetzes zu speichern;

einen oder mehrere weitere Prozessor (121), in Verbindung mit dem weiteren Speicher (140), der konfiguriert ist, Schritte auszuführen des:

Aktualisierens der neuronalen Netze zur Verkehrsprognose unter Verwendung der trainierten Multi-Task-Parameter;

Generierens einer aktualisierten globalen zeitabhängigen Verkehrskarte auf der Grundlage der trainierten Multi-Task-Verkehrsmodelle; und

Verteilens der Datenclusterregeln an die Vielzahl von Lernagenten (110);

wobei der mindestens eine Lernserver (115) und die Vielzahl von Lernagenten (110) konfiguriert sind, die zeitabhängige globale Verkehrskarte kollaborativ aufzubauen, wobei die zeitabhängige globale Verkehrskarte als ein zeitabhängiger Graph modelliert ist; und

wobei jede Kante des zeitabhängigen Graphen die prognostizierte direktionale Fahrzeit auf einem Straßensegment ist, das zwei Knoten des Graphen verbindet;

wobei der mindestens eine Lernserver (115) konfiguriert ist, die trainierten globalen Verkehrsmodelle an Lernagenten zur Fahrzeitprognose zu verteilen;

wobei der eine oder die mehreren weiteren Prozessoren (121) in Verbindung mit dem weiteren Speicher (140) ferner konfiguriert sind, die aktualisierte globale zeitabhängige Verkehrskarte an das auf dem Straßennetz verkehrende Fahrzeug zu verteilen; und

wobei jeder Lernagent konfiguriert ist, eine Fahrzeit auf Straßensegmenten durch Prognostizieren einer Verkehrsgeschwindigkeit unter Verwendung globaler Verkehrsmodelle und seiner lokalen Daten zu berechnen, wobei eine Gewichtung jeder Kante des zeitabhängigen Graphen als die direktionale Fahrzeit auf dem Straßensegment zu einem Zeitpunkt t modelliert wird, welche als das Verhältnis zwischen der Länge des Straßensegments und der prognostizierten Geschwindigkeit berechnet wird, wobei die Verkehrsgeschwindigkeitsprognose ein durch Prognostizieren einer Verkehrsgeschwindigkeit mit kurzem Zeithorizont, einer Verkehrsgeschwindigkeit mit mittlerem Zeithorizont und einer Verkehrsgeschwindigkeit mit langem Zeithorizont ein Multi-Horizont ist, wobei ein Prognosezeithorizont aus mehreren Prognosezeitperioden gebildet ist, ein Prognosezeithorizont die am weitesten entfernte Zeit darstellt, zu welcher der Verkehr prognostiziert wird, und die Prognoseperiode angibt, wie oft der Verkehr innerhalb eines Prognosezeithorizonts prognostiziert wird.

**Revendications**

1. Procédé de prédiction de trafic à base d'apprentissage automatique distribué mis en œuvre par ordinateur pour prédire un trafic de routes, comprenant les étapes consistant à :

distribuer (610) des modèles de trafic multitâches globaux par l'intermédiaire d'un serveur d'apprentissage à des agents d'apprentissage pour entraîner localement les modèles de trafic ;

télécharger (625) des modèles de trafic multitâches globaux entraînés localement sur le serveur d'apprentissage, dans lequel les modèles de trafic multitâches globaux entraînés localement ont été entraînés par les agents d'apprentissage ;

mettre à jour (640) les modèles de trafic multitâches globaux par l'intermédiaire du serveur d'apprentissage en utilisant les modèles de trafic multitâches globaux entraînés localement téléchargés à partir des agents d'apprentissage ; et

générer (640) une carte de trafic global dépendant du temps par l'intermédiaire du serveur d'apprentissage en utilisant les modèles de trafic multitâches globaux mis à jour ;

dans lequel le serveur d'apprentissage et les agents d'apprentissage construisent en collaboration la carte de trafic global dépendant du temps, dans lequel la carte de trafic global dépendant du temps est modélisée sous la forme d'un graphique dépendant du temps ; et

dans lequel chaque bord du graphique dépendant du temps est le temps de déplacement directionnel prédit sur un segment de route reliant deux sommets du graphique ;

dans lequel le serveur d'apprentissage distribue les modèles de trafic global entraînés aux agents d'apprentissage pour une prédiction de temps de trajet ;

dans lequel le procédé comprend en outre une distribution (640) de la carte de trafic mondial dépendant du temps à chacun de véhicules se déplaçant sur les routes ; et

dans lequel chaque agent d'apprentissage calcule un temps de déplacement sur des segments de route en prédisant la vitesse de trafic à l'aide de modèles de trafic globaux et de ses données locales, dans lequel un poids de chaque bord du graphique dépendant du temps est modélisé en tant que temps de déplacement directionnel sur le segment de route à un instant t, calculé comme le rapport entre la longueur du segment de route et la vitesse prédite, dans lequel la prédiction de la vitesse de trafic est multi-horizon en prédisant la vitesse de trafic à horizon temporel court, la vitesse de trafic à horizon temporel moyen et la vitesse de trafic à horizon temporel long, dans lequel un horizon temporel de prédiction consiste en de multiples périodes temporelles de prédiction, un horizon temporel de prédiction représente le temps le plus éloigné dans lequel le trafic est prédit, la période de prédiction indiquant à quelle fréquence le trafic est prédit dans un horizon temporel de prédiction.

2. Procédé selon la revendication 1, dans lequel un serveur d'apprentissage conçoit les modèles de trafic multitâches globaux sous la forme de réseaux neuronaux de prédiction de trafic, dans lequel un serveur d'apprentissage est une unité en bordure de route ou un eNodeB ou un nuage.

3. Procédé selon la revendication 1, dans lequel des agents d'apprentissage distribués entraînent (615) les modèles de trafic multitâches globaux en utilisant leurs propres données locales, dans lequel les agents d'apprentissage sont des collecteurs de données d'infrastructure, dans lequel chaque collecteur de données est situé sur des réseaux routiers et configuré pour collecter des données de trafic au niveau de l'emplacement arrangé.

4. Procédé selon la revendication 1, dans lequel le serveur d'apprentissage est configuré pour concevoir des règles de regroupement de données et distribuer des règles de regroupement de données aux agents d'apprentissage ; et dans lequel chaque agent d'apprentissage est configuré pour regrouper ses données locales en utilisant des règles distribuées.

5. Procédé selon la revendication 1, dans lequel l'apprentissage automatique multitâche distribué est effectué en plusieurs cycles, dans lequel dans chaque cycle, le serveur d'apprentissage distribue les modèles de trafic mis à jour aux agents d'apprentissage, dans lequel chaque agent d'apprentissage entraîne les modèles de trafic reçus pour de multiples itérations en utilisant ses données locales, dans lequel chaque agent d'apprentissage télécharge des modèles de trafic entraînés localement sur le serveur d'apprentissage, dans lequel le cycle d'apprentissage se poursuit jusqu'à ce que les modèles de trafic soient bien entraînés.

6. Procédé selon la revendication 1, dans lequel un véhicule utilise un graphique dépendant du temps pour déterminer un itinéraire ($\overline{v}_1 = s, \overline{v}_2, ..., \overline{v}_i, \overline{v}_{i+1}, ..., \overline{v}_k = d$) en quittant l'emplacement actuel s à l'instant $t_s$ vers la destination d avec le temps de trajet le plus court en résolvant le problème d'optimisation suivant

$$\arg \min_{(\overline{v}_1, ..., \overline{v}_k)} t_d(s, t_s) - t_s,$$

s.t.

$$t_1 = t_s,$$

$$t_{i+1} = t_i + w_{(\overline{v}_i, \overline{v}_{i+1})}(t_i), i \in \{1, 2, ..., k-1\},$$

où $t_d(s, t_s)$ désigne le temps de trajet en quittant l'emplacement s à l'instant $t_s$ vers l'emplacement de destination d, la première contrainte est due au fait que le véhicule part s à l'instant $t_s$ et la seconde contrainte montre que le temps d'arrivée au sommet est $\overline{v}_{i+1}$ égal à la somme du temps de départ à $\overline{v}_i$ et du temps de trajet sur le sous-segment de route ($\overline{v}_i, \overline{v}_{i+1}$) à l'instant $t_i$.

7. Procédé selon la revendication 1, dans lequel les réseaux routiers sont générés en convertissant une carte stockée dans un serveur de cartes, dans lequel la carte est fournie de manière à couvrir une région géométrique à grande échelle telle qu'une ville.

8. Procédé selon la revendication 7, dans lequel les réseaux routiers sont convertis en un graphique dépendant du temps basé sur les réseaux neuronaux de prédiction de trafic bien entraînés.

9. Procédé selon la revendication 1, dans lequel chaque agent d'apprentissage forme des réseaux neuronaux de prédiction de trafic correspondant à différentes tâches de trafic.

10. Procédé selon la revendication 1, dans lequel l'apprentissage automatique distribué est réalisé par une technique d'apprentissage fédéré, FL.

11. Système de prédiction de trafic à base d'apprentissage automatique distribué (300) pour fournir une prédiction de trafic à des véhicules circulant sur un réseau routier, comprenant :

    une pluralité d'agents d'apprentissage (110) ;
    au moins un serveur d'apprentissage (115) ; et
    un réseau de communication (112) configuré pour connecter la pluralité d'agents d'apprentissage (110) et le au moins un serveur d'apprentissage (115), au moins une unité en bordure de route (190) et des véhicules (120) se déplaçant sur le réseau routier ;
    dans lequel chaque agent d'apprentissage de la pluralité d'agents d'apprentissage (110) comprend :

        une interface (151) configurée pour collecter des données de trafic local à partir de capteurs agencés sur le réseau routier, l'interface (151) étant configurée pour acquérir des modèles de trafic multitâches et des règles de regroupement de données à partir du au moins un serveur d'apprentissage (115) via le réseau de communication (112) ;
        une mémoire (170) configurée pour stocker les données de trafic local, les règles de regroupement de données et les modèles de trafic entraînés, les réseaux neuronaux de prédiction de trafic ;
        un processeur (160), en association avec la mémoire (170), configuré pour :

            entraîner localement les réseaux neuronaux de prédiction de trafic pour mettre à jour les modèles de trafic multitâches acquis des réseaux neuronaux de prédiction de trafic en utilisant les données de trafic local sur la base des règles de regroupement de données ; et
            télécharger les modèles de trafic multitâches entraînés localement mis à jour vers le au moins un serveur d'apprentissage via l'interface (151) en utilisant le réseau de communication (112) ; et

    dans lequel le au moins un serveur d'apprentissage (115) comprend :

        un émetteur-récepteur (150) configuré pour acquérir des paramètres multitâches entraînés de réseaux neuronaux de prédiction de trafic à partir de la pluralité d'agents d'apprentissage (110) via le réseau de communication (112), dans lequel chaque agent d'apprentissage de la pluralité d'agents d'apprentissage (110) est agencé en un emplacement sur le réseau routier ;
        une mémoire (140) configurée pour stocker des données de trafic, une carte globale dépendant du temps, des réseaux neuronaux de prédiction de trafic, des modèles de trafic multitâches entraînés et la carte de réseau routier ;
        un ou plusieurs processeurs supplémentaires (121), en association avec la mémoire supplémentaire (140), configurés pour effectuer les étapes consistant à :

            mettre à jour les réseaux neuronaux de prédiction de trafic en utilisant les paramètres multitâches entraînés ;
            générer une carte de trafic global dépendant du temps mise à jour sur la base des modèles de trafic multitâches entraînés ; et
            distribuer les règles de regroupement de données à la pluralité d'agents d'apprentissage (110) ;

    dans lequel le au moins un serveur d'apprentissage (115) et la pluralité d'agents d'apprentissage (110) sont configurés pour construire en collaboration la carte de trafic globale dépendant du temps, dans lequel la carte de trafic global dépendant du temps est modélisée sous la forme d'un graphique dépendant du temps ; et
    dans lequel chaque bord du graphique dépendant du temps est le temps de déplacement directionnel prédit sur un segment de route reliant deux sommets du graphique ;

dans lequel le au moins un serveur d'apprentissage (115) est configuré pour distribuer les modèles de trafic global entraînés à des agents d'apprentissage pour une prédiction de temps de trajet ;

dans lequel les un ou plusieurs processeurs supplémentaires (121), en association avec la mémoire supplémentaires (140), sont en outre configurés pour distribuer la carte de trafic global dépendant du temps mise à jour au véhicule se déplaçant sur le réseau routier ; et

dans lequel chaque agent d'apprentissage est configuré pour calculer un temps de déplacement sur des segments de route en prédisant la vitesse de trafic à l'aide de modèles de trafic globaux et de ses données locales, dans lequel un poids de chaque bord du graphique dépendant du temps est modélisé en tant que temps de déplacement directionnel sur le segment de route à un instant t, calculé comme le rapport entre la longueur du segment de route et la vitesse prédite, dans lequel la prédiction de la vitesse de trafic est multihorizon en prédisant la vitesse de trafic à horizon temporel court, la vitesse de trafic à horizon temporel moyen et la vitesse de trafic à horizon temporel long, dans lequel un horizon temporel de prédiction consiste en de multiples périodes temporelles de prédiction, un horizon temporel de prédiction représente le temps le plus éloigné dans lequel le trafic est prédit, la période de prédiction indiquant à quelle fréquence le trafic est prédit dans un horizon temporel de prédiction.

FIG.1

Learning servers — 115

Vehicles traveling on roads — 120

Wireless connection

Wired connection

112

Distributed data collectors — 110

Road network — 105

100

FIG.2

# FIG.3A

Learning server — 300

310, 115

Model 1    Model 2    · · ·    Model M

Trained models by data collector 1

340 — Trained models by data collector N

360

Traffic prediction by data collector 1

Traffic prediction by data collector N

Traffic prediction by data collector 2

Trained models by data collector 2

110

Global models Cluster rules

Global models Cluster rules

350

320 — Global models Cluster rules

Local data 1

Local data 2

Local data N

Toll station

Loop detector

Camera

Data collector 1

Data collector 2

Data collector N

330 — Cluster-1 data    Cluster-2 data    · · ·    Cluster-M data

EP 4 252 217 B1

# FIG.3B

370

**Prediction time horizon**

Time

$\Delta t$
**Prediction period**

380

**FIG.3C**

EP 4 252 217 B1

FIG.4

# FIG.5A

EP 4 252 217 B1

$$w_{vs,ve}(t_s) = w_{vs,c}(t_s) + w_{c,ve}(t_c)$$

580

e — 500

$D_1$ —560    $D_2$ —570

510 — $v_s$    $R_1$    c    $R_2$ — 540    $v_e$ — 520

530    550

# FIG.5B

Predicted traffic speed
for road segment $R_1$

Calculation of travel time $w_{vs,c}(t_s)$

$w_{vs,c}(t_s)$

$s_0$    $D_1$

Time

$t_s$    $t_s + D_1/s_0$

$\Delta t$

# FIG.5C

Predicted traffic speed
for road segment $R_2$

Calculation of travel time $w_{c,ve}(t_c)$ using piecewise speed function

$$d_1+d_2+d_3+d_4+d_5+d_6+d_7 = D_2$$

$d_1=s_1\alpha\Delta t$   $d_2=s_2\Delta t$   $d_3=s_3\Delta t$   $d_4=s_4\Delta t$   $d_5=s_5\Delta t$   $d_6=s_6\Delta t$   $d_7=s_7\beta\Delta t$

$s_7$   $s_5$   $s_6$   $s_3$   $s_2$   $s_4$   $s_1$

Time

$t_c$   $t_c+\alpha\Delta t$   $t_c+(\alpha+1)\Delta t$   $t_c+(\alpha+2)\Delta t$   $t_c+(\alpha+3)\Delta t$   $t_c+(\alpha+4)\Delta t$   $t_c+(\alpha+5)\Delta t$   $t_c+(\alpha+5+\beta)\Delta t$

$\Delta t$

$w_{c,ve}(t_c)$

# FIG.6

```
┌──────────────┐        ┌──────────────────┐        ┌──────────────────────┐
│  ⌐ 600       │        │   ⌐ 615          │        │     ⌐ 625            │
│ Local traffic│        │Data collectors   │        │ Learning server      │
│ data at data │───────▶│cluster local data│        │distributes global    │
│ collectors   │        │and locally train │        │traffic models to     │
│              │        │traffic models    │        │data collectors       │
└──────────────┘        └──────────────────┘        └──────────────────────┘
                              ▲     │                         ▲
        ⌐ 605                 │     ▼   ⌐ 610                 │    ⌐ 620
┌──────────────┐        ┌──────────────────────┐    ┌──────────────────────┐
│Learning server│       │Learning server       │    │Learning server builds│
│designs traffic│──────▶│distributes data      │───▶│global traffic models │
│models and     │       │cluster rules and     │    │by aggregating locally│
│rules to       │       │traffic models to data│    │trained models        │
│cluster data   │       │collectors, and       │    │                      │
│               │       │coordinates multi-    │    │                      │
│               │       │round distributed     │    │                      │
│               │       │training              │    │                      │
└──────────────┘        └──────────────────────┘    └──────────────────────┘
        ▲                         │
        │               ┌─────────┘
        │      ⌐ 630    │    ⌐ 635              ⌐ 640
        │     ┌─────────▼────┐  ┌──────────────┐  ┌──────────────────────┐
        │     │Data collectors│ │Data collectors│ │Learning server builds│
        │     │make local     │─│send local     │─│time-dependent graph  │
        │     │traffic        │▶│traffic        │▶│and distributes the   │
        │     │predictions    │ │predictions to │ │graph to vehicles     │
        │     │               │ │learning server│ │                      │
        │     └───────────────┘ └──────────────┘  └──────────────────────┘
        │             │
        │    ┌─────────┘
        │    │   ⌐ 645           ⌐ 650
        │   ┌▼──────────┐  ┌──────────┐  ┌──────────────┐  ⌐ 655
        │   │Vehicles   │  │Vehicles  │  │Vehicles      │
        │   │plan routes│──│travel on │──│provide       │
        │   │using time-│▶ │planned   │▶ │feedback to   │
        │   │dependent  │  │routes    │  │learning      │
        │   │graph      │  │          │  │server        │
        │   └───────────┘  └──────────┘  └──────────────┘
        │                                        │
        └────────────────────────────────────────┘
```

FIG.7

---

**Algorithm 1** Multi-Task FL for the traffic speed prediction.

---

**Input:** $\mathcal{N}$, $S_{m,n}$, $M$, $\eta$, m $\in \{1, ..., M\}$, $n \in \mathcal{N}$.

**Output:** Speed prediction model for each traffic situation.

1. According to the clustering criteria (e.g., weather conditions, time, and special events), the divisive clustering method is used to partition collected data at each data collector into $M$ data clusters.

2. The learning server generates the global learning model with model parameters $w_{m,0}$, for data cluster $m \in \{1, ..., M\}$.

**for** $j = 0, ..., T - 1$ **do**

  (a) The learning server sends $w_{m,j}$, $m \in \{1, ..., M\}$, to all stations.

  (b) Data collector $n \in \mathcal{N}$ trains the local learning models by using the gradient descent in (7) on its data clusters and obtain $w_{m,j,n}$, which will be sent to the learning server.

  (c) The learning server aggregates the model parameters received from the data collectors and update the global learning model parameters based on (8).

**end**

---

EP 4 252 217 B1

FIG.8A

---

**Algorithm 2** Modified A$^*$ algorithm for the routing planing

---

**Input:** $\mathcal{G} = (\mathcal{V}, \mathcal{E}, \mathcal{W})$, $s$, $d$, $t_s$, $h_d$.

**Output:** Route selection and estimated traveling time.

1. For vertex $v \in \{\mathcal{N}/v_s\}$, $g_v = \inf, l_v = \inf$; for vertex $s$, $g_s = t_s, l_s = g_s + h_d(s)$.

2. Let $Q$ be a priority queue containing pair $(v, l_v)$, $\forall v \in \mathcal{V}$, ordered by $l_v$ in an ascending order.

3. Let $P$ be a empty dictionary.

**if** $Q$ is not an empty queue **then**

    Dequeue $Q$ and obtain the pair $(v', l_{v'})$ and $g_{v'}$

    **if** $v' = v_d$ **then**

        **return** *OptimalRouteCalculation*$(P, v')$ and $g_{v'}$; break.

    **else**

        **for** Adjacent vertex $v$ connecting to $v'$ with a road subsegment **do**

            **if** $g_v \geq g_{v'} + w_{(v',v)}(g_{v'})$ **then**

                (a) $g_v = g_{v'} + w_{(v',v)}(g_{v'})$

                (b) $l_v = g_v + h_d(v)$

                (c) $P[v] = v'$

        **end**

        Update the queue $Q$.

**else**

    break

---

EP 4 252 217 B1

FIG.8B

---

**Algorithm 3** *OptimalRouteCalculation$(P, v')$*

---

**Input:** $(P, v')$
**Output:** Route $R$
1. $\bar{v} = v'$, $R = \emptyset$
**if** $P$ is not empty **then**
   |   (a) Add $\bar{v}$ into the $R$.
   |   (b) $\bar{v} = P(\bar{v})$
**else**
   |   break.
2. Reverse the order of $R$, and **return** $R$.

---

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019311298 A1

- US 2012072096 A1

### Non-patent literature cited in the description

- Time-dependent Decentralized Routing using Federated Learning. **WILBUR MICHAEL et al.** 2020 IEEE 23RD INTERNATIONAL SYMPOSIUM ON REAL-TIME DISTRIBUTED COMPUTING (ISORC). IEEE, 19 May 2020, 56-64

- **YI LIU et al.** Privacy-preserving Traffic Flow Prediction: A Federated Learning Approach. *ARXIV.ORG*, 19 March 2020, 14853